# EUROPEAN PATENT APPLICATION

(11) **EP 2 112 593 A1**
(43) Date of publication of application: **28.10.2009**
(21) Application number: 08008040.1
(22) Date of filing: 25.04.2008
(51) Int. Cl.: G06F 9/44

(54) **Domain model concept for developing computer applications**

(71) Applicant: Facton GmbH, 01069 Dresden (DE)
(72) Inventor: Günsel, Christian, 01309 Dresden (DE)
(74) Representative: Grünecker, Kinkeldey, Stockmair & Schwanhäusser Anwaltssozietät

(57) **Abstract**

The present invention relates to methods and systems for developing a computer application wherein a domain specific language is provided that allows for the developing of computer applications based on a configuration. In particular, the domain specific language pertains to calculation tasks.

The developing of a computer application according to the present invention is performed at different levels or phases. In particular, these phases are the providing of an application development system in the design phase, performing the application configuration and executing the application.

The design phase provides the application design environment and provides the abstract basis for the application development in the sense of configuration classes and domain-specific language.

For the specific configuration of an application in a particular project, i.e. for the development of a specific application, resources as elements and their associations are defined. This configuration is stored in a configuration file.

At run time, an application is generated which instantiates the resources and configured elements. Within the generated graphical user interfaces of the application the instantiated resource objects are provided and the calculation is performed according to the configured element assignment.

## Description

The present invention relates to methods and systems for developing a computer application wherein a domain specific language is provided that allows for the developing of computer applications based on a configuration.

When developing, i.e. programming, extensive computer applications, developers have to cope with a high level of complexity and still have conform to the requirement of securing a high level of quality in terms of the reliability of the software program that is developed. This is in particular the case when respective applications are used for critical purposes or in critical environments. Because of that, programming applications induces significant efforts and therefore costs, since in order to cope with the complexity and for ensuring the quality of critical applications, a lot of time has to be invested by software programming experts not only for programming itself but also for tests and quality assurance.

As the programming of a computer application for a given context or rather problem domain therefore reflects a significant investment a natural motivation occurs to transfer at least parts of a program coded for one domain to another domain or context. This transfer can generally be called "reuse". One way to perform this kind of resource in order to reduce the effort needed to code a new application for a different context is to "cut&paste" code from one program to another. However using this method is known to be failure-prone and thus reduces the effort for coding but may well serve to significantly increase the needed effort for quality assurance.

Therefore, in order to support the consistency and quality of programming and to further enable the reuse of pieces of functionality that have been developed in the past various methods have been developed to provide software developing environments that enable software programming in an abstract way.

One of these methods known in the art is the method of object-oriented programming. Common functionality can here be factored out into objects that are supplemented with defined interfaces. Thereby, interoperability is facilitated since the objects can interact on the basis of these described interfaces. Thereby, the level of abstraction and programming can be heightened as ideally objects can be routed in a specific problem domain, i.e. the knowledge domain of the problem to be solved by the to-be-developed application. In that case, the level of abstraction that is used for programming is not sited in the "computer domain", but in a more specific, problem-oriented domain or rather a more abstract, i.e. non-technical domain.

While in these methods as known in the art functionality is factored out into objects and bundled into common libraries and utility classes the more structured way of using object-oriented programming principles can be provided by incorporating framework based methods. In that case, common functionality is aggregated into a framework and provides common functionality, but in addition also serves for setting an infrastructure for a working program.

Nevertheless, all of these and similar methods known in the art have in common that they make use of the principle of inheritance by which variances can be controlled. By the inheritance principle, any change applied to the parent object is inherited to the respective child object. This inheritance principle, however, creates significant burden, when it comes to upgrading the developed application and in particular when creating program variance or in case initially developed software is intended to be reused in a new problem context.

In these cases, at least part of the programming has to be redone or at least checked every time the pieces of functionality change, and this makes upgrading or transferring programmed applications complicated and expensive. Furthermore, although the major part of the code when developed according to the described prior art methods is generated by for example the framework still at least some code fragments adding functionality and in particular describing how the different modules of the framework should work together have to be developed from scratch. Therefore, a system-wide quality cannot be guaranteed on the basis of quality checks of the framework only but instead a whole system check has to be done which again is complicated and expensive.

These exemplarily highlighted drawbacks of the methods known in the art show that developing applications still is a relatively expensive and complex effort. In particular, this is true in cases where the application shows significant complexity and a high level of quality is needed because of the criticality of the domain the software supporting. Furthermore, the methods known in the art do not allow transferring knowledge pre-coded in a project that has been done in a particular problem domain to another project in that same domain.

As outlined above, some of the problems solved in such a "preceding" project, i.e. the programming code developed in that project can be transferred when factored out into a framework. Nevertheless still a complete software development cycle has to be performed in order to ensure the quality also in the following projects as the framework itself cannot guarantee the quality.

Therefore, there is a need for improved methods and systems for developing software applications that allow transferring domain-specific knowledge from one project into another without the need of performing new program development cycles and quality assurance routines.

This problem is solved by the subject matter of the independent claims.

Preferred embodiments are subject to the dependent claims.

In particular, this object is solved by a method for developing a computer application that is configured for performing calculation tasks based on the configuration of calculation objects that use a domain-specific language. The method provides a domain-specific language that defines syntax for the configuration of calculation objects wherein each element of the syntax has assigned generalized functionality. Moreover, the method provides a set of configuration classes that define an abstract object model implementing the generalized functionality of the domain-specific language. In addition, the method provides a translation engine, for example a parser, configured for translating the domain-specific language into the object model. Thereby, for actually developing the application, it is sufficient to create one or more configuration files that use the domain-specific language, wherein the configuration file at least comprises the declaration of a set of variables, a set of resources and a structure for each of the resources. These configuration files then are read and translated into the object model and in response to this translation a computer application presents a graphical user interface and performs calculations tasks upon user input as defined in the configuration files.

As the development of an application for a specific project in the problem domain described by the domain-specific language is reduced to the creating of a configuration file that uses the defined syntax, the effort to create a customer-specific application is dramatically reduced. In particular, the creation of a configuration file needs significantly less effort as for example compared to an actual programming task. Even further, as the configuration files are translated into a predefined object model the quality of the application can be controlled at the level of the object model and the syntax check of the configuration files which significantly lowers the effort for ensuring the reliability of the to-be-developed application.

Traditionally, objects of the problem domain, for example types of resources, are modeled as independent classes. The above-described inventive concepts underlying the present invention in contrast provide a technique that allow for creating such objects as for example resources as a configured instance of the generalized object class that is created in a purely declarative way.

With respect to objects like resources used for performing calculations this inventive concept is enabled by the insight that types of resources used for creating a calculation oriented software application differ form each other only in project-specific attributes that for example are due to differences of the user contexts, parameters relevant to the calculation and of course the calculation algorithms used. However, in order to reduce the effort needed for creating a product-specific software application, the inventive method reduces the specific development efforts to a larger part on these aspects so that the differences are made explicit, for example by the declaration of calculation schemes, but the generalized domain-specific model is mapped into the generalized object model.

Therefore, in a preferred embodiment the declaration of the structure of a resource comprises the declaration of a resource signature, the resource signature determining the attributes of said resource and calculation schemes used by said resource. Further, the declaration of the structure of a resource comprises an association of the resource assigning other resources as sub-resources to that resource, i.e. the declaration of the resource assignment.

Moreover, in a preferred embodiment the generalized functionality provides for the generating of a graphical user interface and the performing of calculation tasks upon user input wherein the generating and performing depends on the configuration of calculation objects.

In a further preferred embodiment, the declaration of a set of variables comprises the declaration of quantity variables, the quantity variables expressing the consumption of resources and/or the declaration of calculation variables, the calculation variables for specifying a result of a calculation or a parameter of a calculation.

In a further preferred embodiment, the declaration of the structure of a resource comprises the declaration of the resource signature, the resource signature at least comprising a quantity variable, the quantity variable expressing the consumption of that resource and being declared in the set of variables, a element as parent resource consuming said resource as a child resource, and a calculation scheme for calculating the amount of the quantity variable caused by the consumption.

In an even further preferred embodiment, the translation of the configuration file further comprises the reading of the configuration file, the generating of the variable dependency determining the interdependency of the calculation variables defined in the resource signature and the generating of an aggregator for summing up any calculation variables based on the values of the caused variables of the child resources.

Further, the above-described object is solved by a computer system prepared for executing a computer application, the computer application configured for performing calculation tasks based on the configuration of configuration objects using a domain-specific language, wherein the computer system comprises means for providing access to a set of configuration classes that define an abstract object model implementing a generalized functionality of a domain-specific language, the domain-specific language defining a syntax for the configuration of calculation objects wherein each element of the syntax having assigned generalized functionality. Moreover, the computer system comprises a translation engine, preferably a parser engine that is configured for translating the domain-specific language into the object model. Further, the computer system comprises means for providing access to one or more configuration files using the domain-specific language, the configuration files at least comprising the declaration of a set of variables, a set of resources and the structure of each resource. Finally, the computer system comprises a processing unit that generates in response to the translation of the configuration files a computer application presenting a graphical user interface and performing a calculation task upon user input as defined in the configuration files.

Further, preferred embodiments are defined in the dependent claims and will also be described in the following with reference to the accompanying drawings, in which
- Fig. 1: schematically illustrates a computer system configured for developing and executing a computer application in accordance with the present invention;

- Fig. 2: shows an exemplary configuration file according to the present invention and the input and output mask of the graphical user interface of the computer application generated based on the configuration files;
- Fig. 3: schematically shows the elements of the phases of application development and execution in accordance with the present invention;
- Fig. 4: provides a concept overview of the tasks performed during software application development and execution in accordance with the present invention;
- Fig. 5: illustrates a static structure of the classes of a translator engine that generates from a given configuration file a resource configuration object;
- Fig. 6: shows a sequence diagram that illustrates the processing of a configured calculation; and
- Fig. 7: schematically shows the process of software application development an application execution in accordance with the present invention.

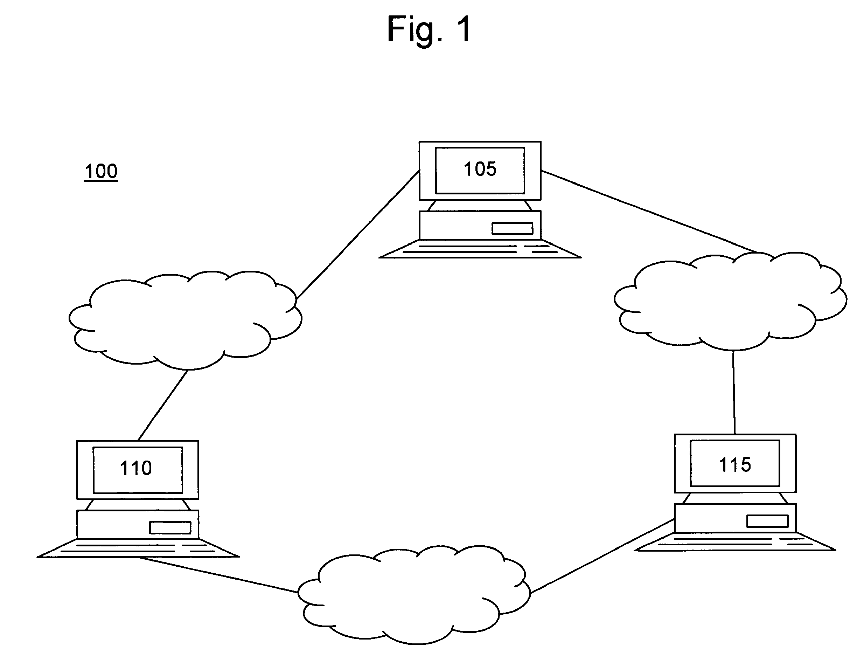

Fig. 1 schematically shows a computer system 100. The computer system 100 consists of the three computers 105, 110 and 115. The number of computers, however, is only illustrative and can vary in different embodiments of the present invention. In particular, the computer system can be implemented in one single computer. The computers 105, 110, 115 are computer systems according to the known techniques of the arts and can in particular be mobile computers systems, PDAs or the like. Any computer device being configured to perform tasks as defined by computer-readable program code can be used in order to implement the computers 105, 110, 115 as illustrated by Fig. 1.

Moreover, Fig. 1 shows the different computers 105, 110, 115 of computer system 100 as interconnected via network connections that in particular embodiments can also be implemented by internet-based connections.

Furthermore, computer 105 in a preferred embodiment is the design computer system. In that preferred embodiment, computer system 105 provides configuration classes for a domain-specific language (DSL) that implement the intended semantics of the language and therefore provides the abstract knowledge of the specific domain of the DSL. Furthermore, computer system 105 provides the domain-specific language itself, which defines by way of the grammar the syntax for resource configuration files and the definition files for calculation schemata. Furthermore, the grammar contains program code fragments for each element of the language. These program code fragments make use of the interfaces of the domain-specific configuration classes. In a preferred embodiment, the program code fragments can be implemented by C# code snippets. In this case, these code snippets use the domain-specific configuration classes as interfaces. Finally, computer system 105 provides translation classes that can process configuration files in accordance with the present invention. A preferred embodiment of the translation classes can process concrete resource configurations and calculation schemata defined or rather declared by way of a configuration file. Therefore, in a preferred embodiment the translation class contains the program code fragments of the domain-specific language. In a preferred embodiment, the translation classes are C# parser classes that contain C# snippets from the grammar of the domain-specific language.

Computer system 110 in a preferred embodiment is the design computer system. In a preferred embodiment, computer system 110 serves as a design tool that is operated by a user that creates configuration files in accordance with the present invention. Therefore, in a preferred embodiment computer system 110 runs a design application that provides a user with a graphical user interface that enables the user to define and create a configuration file that conforms with the language, grammar and syntax of the domain-specific language provided by computer system 105.

In a preferred embodiment, computer systems 105 and 110 can actually be one and the same computer. At least, however, computer system 110 has access to the elements provided by computer system 105 as described above. In particular, computer system 110 can access the domain-specific language with its elements. In a preferred embodiment, this access can either be provided by the network connection but can also be implemented via internet-based network connections or the access can be provided by a data store contained in a computer system 110, for example a database that contains the domain-specific language and its elements or at least a part of that domain-specific language.

The user operating computer system 110 operates preferably a software implemented design tool that allows the user to write using the domain-specific language, i.e. the DSL's grammar and syntax, a configuration file that defines a concrete configuration of resources and calculation schemes. Preferably, this configuration file is stored in a data store of a computer system 110. However, in alternative embodiments, the configuration file can either be transferred to computer system 105 and/or computer system 115.

Within the configuration file, in a preferred embodiment at least calculation variables and quantity variables are declared. The following example illustrates this kind of configuration in an exemplary implementation of the present invention:

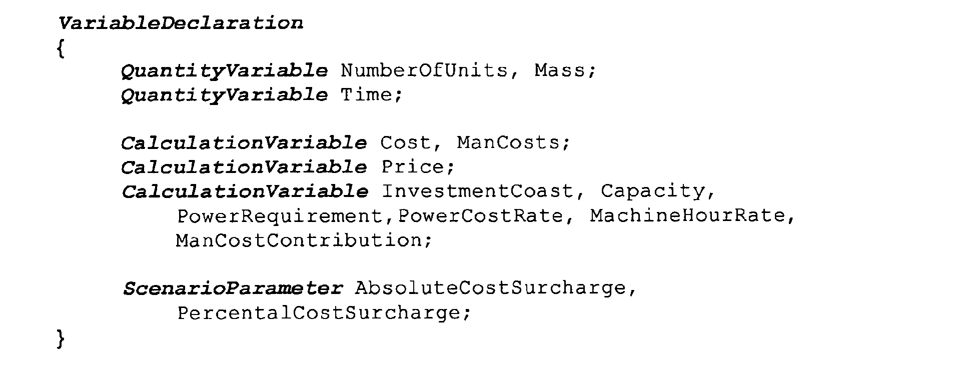

In that example expressions like "VariableDeclaration", "QuantityVariable" and the like are provided by the DSL while expressions like "Time", "Cost" and like are configured variables.

Furthermore, in a configuration file according to the principles of the present invention resource types and their structure are declared. The following example illustrates this kind of configuration in an exemplary implementation of the present invention:

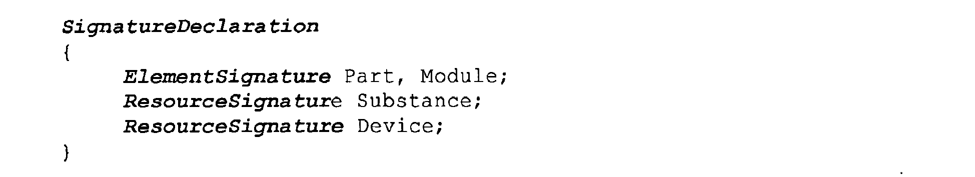

In that example expressions like "SignatureDeclaration", "ElementSignature" and the like are provided by the DSL while expressions like "Part", "Device" and like are configured resources.

For configuring the "behavior" of a resource its structure has to be defined which is achieved in a a configuration file by configuring the signature definition of the given resources. This comprises the definition of the variables of a given resource as well as the definition of the calculation schemata providing the value of these variables. The following example illustrates this kind of configuration in an exemplary implementation of the present invention:

```
   SignatureDefinition
   {
           ElementSignature Part
                QuantityVariable NumberOfUnits
                Provides Mass = SUM(Mass);
                Provides MEK = SUM(MEK) + AbsoluteMEKSurcharge;
                Provides FEK = SUM (FEKContribution) + SUM (FEK);
           ElementSignature Module
                QuantityVariable NumberOfUnits
                Provides Mass = SUM(Mass);
                Provides MEK = SUM(MEK) + AbsoluteMEKSurcharge;
                Provides FEK = SUM(FEKContribution) + SUM(FEK);
           ResourceSignature Substance
                QuantityVariable Mass
                Parameter Price
                Provides MEK = Price(1 + PercentalMEKSurcharge) +
                AbsoluteMEKSurcharge;
           ResourceSignature Device
                QuantityVariable Time
                Parameter InvestmentCost
                Parameter Capacity
                Parameter PowerRequirement
                Parameter PowerCostRate
                Provides MachineHourRate = (InvestmentCost/Capacity)
                    + (PowerRequirement * PowercostRate);
                Provides FEKcontribution = MachineHourRate;
           }
```

In that example expressions like "SignatureDefinition", "RessourceSignature" and the like are provided by the DSL while expressions like "Part", "Device" and like are configuration inputs.

The configuration file, created on computer system 110 is then translated using the translation classes, in a preferred embodiment using the C# parser classes. By this translation as instances of the translation classes translation objects are created, in a preferred embodiment C# parser objects. Therefore, in a preferred embodiment the configuration file is parsed using the C# parser classes and instances of the parser classes are created as C# parser objects.

Computer system 115 preferably serves for executing the application designed by way of the configuration file that uses the domain-specific language. In a preferred embodiment, computer systems 115 and 110 or 115 and 105 can actually be the same computer.

Computer system 115 by way of network connections or by access to a data storage contained in computer system 115 or access to an alternative data storage has access to the translation objects created by the translation of the configuration file using the translation classes.

At run time, in particular at server start, the program code fragments in the translation objects are executed and thereby instantiate configuration objects according to the concrete configuration files created at computer system 110. In a preferred embodiment, computer system 115 has access to the C# parser objects and thus at run time - in this preferred embodiment at server start - the C# snippets in the parser objects are executed. The configuration objects instantiated by executing of the translation objects provide a singleton object graph providing instances of the configuration classes which represent exactly the information in the configuration file. Further, they contain calculator objects, for example aggregators, which can calculate the value of all calculation variables for all resource types according to the calculation schemata defined or rather declared in the configuration file.

Furthermore, resource objects use the configuration objects in order to calculate values for the configured calculation variables in particular by using the calculator objects of their configured type. Moreover, using the configuration objects, a graphical user interface is generated that assists the user for example in tasks like constructing actual resources and filling in of parameters for example in projects or during administration of the application. Furthermore, reporting services make use of the configuration and resource objects to request values for calculation variable according to the definitions declared in the configuration objects. Thus, using the configuration objects at run time the graphical user interface is generated and presented to the user of computer system 115 that enables the user to perform using this graphical user interface for example the calculation tasks intended to be performed and/or other application services, for example reporting services, as intended.

Therefore, computer system 100 allows for a pure declarative way of developing an application. All definitions of calculation algorithms including the calculation schemata are done in a declarative way and are described in a specific formal language, in particular the domain-specific language. Therefore, according to the present invention the logic of the program codes of the particular application depends on the explicit description of resources that is done in a declarative way.

Using this inventive method of developing a computer application not only serves for reducing the effort of the actual programming but also enhances the performance of the calculation task. In particular, as the application is generated at run time, only those elements or rather resources are calculated that according to the declared calculation logic are truly necessary.

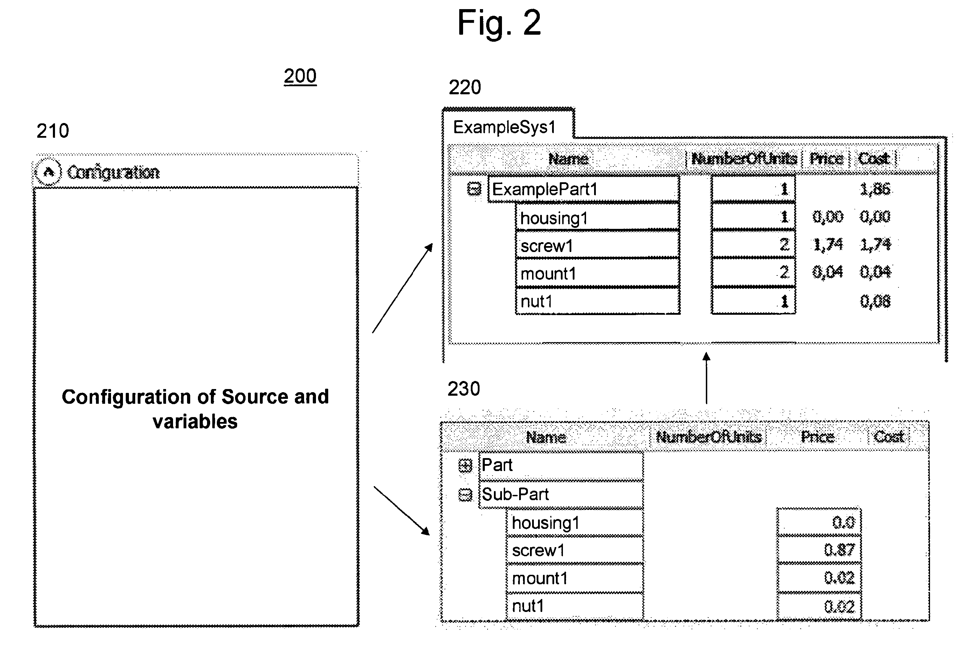

Fig. 2 shows the exemplary example of a computer application 200 developed according to the principles of the present invention. The computer application 200 is developed based on the programming environments provided by computer system 105 as described within the context of Fig. 1.

In this respect, Fig. 2 shows an exemplary configuration file 210 that is developed or rather configured according to the principles of the present invention, in particular based on the domain-specific language provided by computer system 105. Therefore, in this preferred embodiment the configuration 210 uses the elements of the domain-specific language, its grammar and syntax. The configuration file describes calculation schemes (e.g. a simple equation like "provides cost = price"). Moreover, resource objects are described or rather declared and configured by way of a signature declaration and a signature definition. Thus Configuration file 210 configures by declaration source and variables.

The configuration file 210 illustrates that based on the principles and the technique of the present invention the effort for creating a computer application is dramatically reduced and that therefore project-specific customizations in order to meet the requirements of the specific problem domain can be fulfilled without the need of an extensive programming or coding task and without the need of a full software quality as a major part of the quality assurance can be provided based on the quality of the development environment.

In particular, configuration file 210 highlights that for developing a computer application according to the principles of the present invention preferably variable declaration and declarative description of resource types, i.e. calculation objects, and calculation algorithms, i.e. calculation schemes, is sufficient. When applied in a business context, these calculation objects can for example be Parts, Assemblies or a Machine.

Based on this example of configuration file 210, it becomes apparent that the programming environment provided by computer system 105 provides by way of the configuration classes and the domain-specific language the form of the resource types that can be used in a specific domain and the form of the calculation algorithms that can be used in order to create a specific configuration for a particular configuration. The application development itself is then preferably reduced to the declarative description of resources and description of resources and calculation algorithms. This again is then at run time instantiated and executed using the program language translation classes provided by computer system 105.

This is illustrated in Fig. 2 by the graphical user interfaces 220 and 230 of a computer application 200 generated based on the configuration file 210. The graphical user interfaces 220 and 230 are completely determined by the configuration file 210. In other words, using the design environment provided by computer system 105 based on the configuration file 210 a computer application 200 is generated at run time that provides graphical user interfaces 220 and 230. Therefore, based on the present invention any calculation of any objects can be configured using the grammar and syntax of the respective domain-specific language and based on that a computer application is generated at run time that changes functionality and appearance of its graphical user interfaces as determined in the configuration file 210.

The configuration file 210 could for example declare different kinds of elements, e.g. Parts and Sub-Parts. Moreover, in the signature definition these elements are defined in terms of their attributes. For this definition, prior to that, various variable types are declared, e.g. quantity variables and calculation variables. As a quantity variable for example a "Number of Units"-Variable could be declared. As calculation variables for example variables representing "Price" and "Cost" could be declared. However, these variables rather serve as illustrative examples and other variables or variable types, in particular additional variables and variable types could be declared according to the principles of the present invention. Based on that, in the signature definition for any declared element, e.g. an element Part, it is configured how these are consumed by their associated quantity variable. Furthermore, for any declared element calculation schemes are defined based upon the declared calculation variables, e.g. a variable reflecting costs which could for example be calculated as a sum of the costs resources assigned to the respective element. Thereby, it is highlighted that preferably other elements can as resources be assigned to other resources.

For other elements, e.g. an element "Sub-Part", the consumption could also be declared using quantity variables. However, in the signature definition for such elements one or more parameters could be associated with the respective element which has to be input by the later user of the generated application, e.g. a parameter reflecting the price of a unit of that element. Furthermore, it could be defined that the cost consumption of that element would be calculated on the basis of the input price. This however rather serves as an illustrative example of configuration that could be used to generate an application 220/230. According to the principles of the present invention also alternative or modified ways of configuration could be used to achieve the same result.

In graphical user interface 230 it is exemplarily illustrated that by user input Sub-Parts as configured by configuration file 210 can be input. In particular, in this example the user has input four different Sub-Parts with their specific configured parameter, namely Price. Further, as highlighted in the graphical user interface 220, the Part makes use of three of the four defined Sub-Parts and again based on user input the number of units "consumed" by the Part is defined in different quantities according to the quantity variable configured in configuration file 210. In each line again the execution of the configured calculation scheme is highlighted as for each Sub-Part "consumed" by the Part the costs are calculated based on the price and the costs for the number of Sub-Parts which is aggregated to the sum of costs of the Part (1,86).

This configuration could easily be changed by for example changing the configuration of the cost calculation of the element Sub-Part. For example, it could be configured that the cost for a Part is provided as two-times the price. Accordingly, the graphical user interface would change and the calculation of the costs will change as well.

Furthermore, this way of developing an application could be transferred also in other domains, for example for calculating the costs of a service. This example, instead of Parts and Sub-Parts as elements Task and Summarytask and as a further resource a ServicEngineer could be configured. In that example, the costs of the consumption of developed time could be calculated as hour rate. This may highlight that based on the technique provided by the present invention any calculation on any object could be configured in order to generate a respective application.

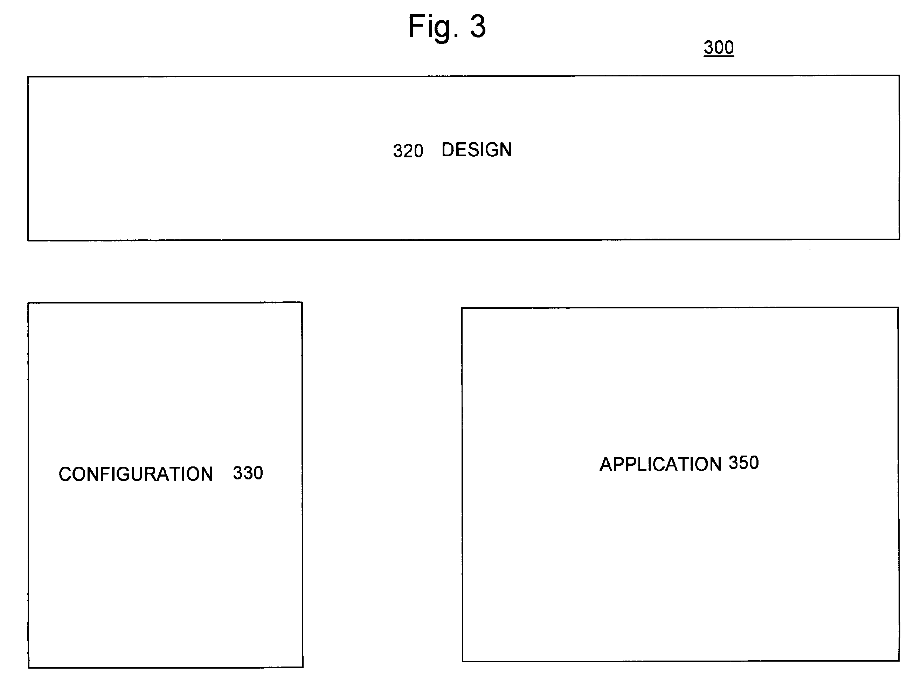

Fig. 3 schematically shows the different phases of computer application development according to the present invention with respect to the feature of resource assignment are described. The resource assignment represents the association of a specified amount of resource A ("sub-resource") to a resource B ("parent-resource". In that sense, A could also be named a provider resource and B would be named a consumer resource. Depending on the specific character of A and B these could also be elements instead of resources.

According to the technique provided by the present invention a resource is an entity which "causes" or rather provides values of a configured calculation variable in case the particular amount of that resource is "consumed" as defined by a resource association. According to the principles of the present invention, a resource is fully defined by its signature as highlighted in the configuration file 210 of Fig. 2. In the syntax of the example illustrated within configuration file 210, a resource is defined within the signature definition as "ElementSignature". Besides the signature, for a full definition of a resource preferably an element assignment of the resource is determined which associates sub-resources to a given resource. In the example of the configuration file 210, this is achieved by defining for a given element which other element could be a comsumers of that element.

Therefore, a resource is in other words a calculation variable provider that means that calculation variables can have a value for each resource. Which calculation variable again can have values for a specific resource is configured by the signature of the respective resource in a configuration file 210, in the example of configuration file 210 the "ElementSignature".

In a preferred embodiment, elements can be differentiated from resources in the sense of "natural resources". In that preferred embodiment, elements are special resources because they are referenced in or make up the bill of materials, for example for CAD application, reporting systems and the like. Moreover, in this preferred embodiment the element represents products and piles of products to be sold or types of such products. In contrast, for example semi-finished parts would not qualify as such elements as they would not be sold. Thus, in this preferred embodiment elements would be differentiated as they implement functions over a product. Alternatively, in this preferred embodiment attributes could be defined at resources or rather resource instances.

The computer application development according to the present invention is processed in different phases. In the design phase of the application development according to the present invention a generalized class of resources is provided. The design phase thus serves as the application design environment is preferably provided by computer system 105. That means that the elements provided with the design 320 phase are provided as the abstract basis for the application development in the sense of the configuration classes and domain-specific language as outlines within the context of Fig. 1.

For a specific configuration 330, i.e. for the development of a specific application, resources as elements and the associations between the resources/elements (i.e. the element assignment) are defined. This configuration is exemplarily shown in configuration file 210 and could preferably be executed on a developer computer system 110 as outlined in Fig. 1.

At run time, an application 350 is generated which instantiates the resources as defined by the configured elements. The resources consist of the element assignments and within the generated graphical user interfaces (220, 230) the instantiated resource objects are provided and the calculation is performed according to the configured element assignments determining the associations between the various resources.

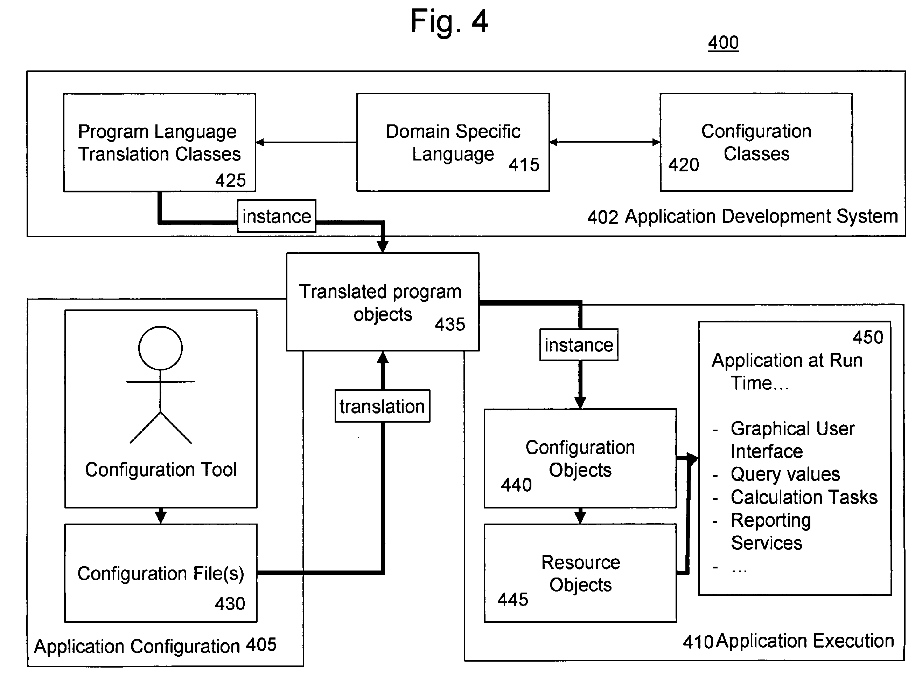

Fig. 4 provides a schematical overview of the system 400 that corresponds to Fig. 3 showing the different levels or phases of the application development according to the principles of the present invention. In particular, Fig. 4 shows the application development system 402, the application configuration 405 and the application execution 410.

As outlined in Fig. 1, the application development system 402 is preferably provided by computer system 105, the configuration 405 is preferably performed on computer system 110 and the application execution 410 is preferably done on computer system 115. The application development system 402 provides the specification for parameters which an object can comprise (resources, calculation algorithms) and provide the general description of these parameters as meta data. These specifications are codified within a domain-specific language 415.

The domain-specific language 415 in that sense is a formal language which defines the specification or rather configuration and calculation schemata needed for a project-specific application development. Therefore, the domain-specific language 415 describes the basic structure of calculation objects and their calculation algorithms. This semantic of the domain-specific language 415 is implemented as an abstract object model, namely the configuration classes 420. Furthermore, application development system 402 provides program language translation classes 425 that translate the domain-specific language 415 into the object model. That means that configuration files 430 generated according to the domain-specific language 415 can be translated by the program translation classes 425 into executable program code. In a preferred embodiment, the program language translation classes 425 are C# Parser classes whereby a parser or rather a compiler is generated that can interpret the domain-specific language 415. Thus, by the application development system 402 an abstract calculation application is implemented that changes in behavior, calculation, graphical user interface and so on according to a given configuration, e.g. as defined by configuration file 210. This change according to the configuration file is reflected in the object model.

For the application configuration 405 that preferably is performed on computer system 110, a user would make use of a design or rather a configuration tool in order to generate configuration files 430. Within this configuration file 430, a user using the configuration tool would configure predefined objects that are predefined by the application development system 402 thus provided within the domain-specific language 415. Therefore, the objects for example could relate to the specific problem domain as highlighted for example in Fig. 2 which illustrates example ojects of a domain of calculation tasks.

A specific advantage of the present invention in that respect lies in the fact that only those objects from the various object types provided by application development system 402 are configured which are specifically needed for the particular application. I.e. objects which are not needed are not configured and are therefore not instantiated during run time. This leads to a significantly improved application performance since only those elements or rather resources are calculated during run time which according to the configured calculation logic are necessary to be calculated. As a consequence, preferably only the small part of the full project is calculated and only that part has to be retrieved from a given database. That means that with the application configuration 405 the user may make use of the numerous object types provided by the application development system 402 by configuring only those objects which are needed for the specific application.

In a preferred embodiment, the configuration files 430 provide the aggregation of all customizing and/or configuration data for an application developed according to the techniques presented by the present invention. In particular, preferably configuration files 430 contain the configuration of all resources which are existent in the project and their calculation attributes and other attributes as well as needed calculation schemes. Furthermore, as highlighted in configuration file 210, configuration files 430 provide a resource signature. The resource signature is a part of the resource configuration and defines all attributes and calculation schemes of a given resource type. A resource signature can have various elements. The elements described herin therefore rather serve as illustrative examples and other, I particular further elements could be used according to the technique of the present invention.

In a preferred embodiment the domain-specific language 415 provides the possibility of configuring calculation variables. A calculation variable in that sense is an identifier that represents a value which is of interest for calculation purposes, for example for calculating production costs. Unambiguousness for calculation variables is ensured by the grammar and syntax of the domain-specific language 415. The value of a calculation variable is provided by a calculation variable value provider. That means that one and the same calculation variable can have different values as provided from different calculation variable value providers. For example, production costs can be calculated as €2 for an Module A and can be calculated as €3 for an Module B. Besides calculation variables, the domain-specific language 415 enables the configuration of quantity variables which provide for the calculation of the consumption of a specific amount of a given resource. Using these and further the above-described elements of the domain-specific language configuration, a context is provided that provides a resource configuration for a given program installation in a specific project. However, it is to be noted that the list of elements of a resource signature as indicated by the above table is rather illustrative for a specific embodiment of the present invention. Other embodiment might provide other or more specific, further elements that can be declared in a resource configuration.

Besides these elements provided by the application development system 402 that are used within the application configuration 405, application development system 402 provides further objects.

In particular, as already indicated above, application development system 402 provides *calculation variable providers* which provide the value for a specific calculation variable. In a preferred embodiment, these calculation variable value providers can be resources and the associations between resources. That means that a calculation variable has a value at a given calculation variable value provider or rather at a given resource.

Furthermore, application development system 402 provides *dictionary value providers* which store values of any calculation variable in a dictionary.

In addition, application development system 402 provides *calculators* which calculate the value of a calculation variable according to the values of other calculation variables at a given calculation variable value provider. In that sense, a calculator does not have any knowledge about which calculation variable is currently calculated. However, a calculator does have knowledge about the calculation variables from which the values are needed in order to perform the given calculation. These needed calculation variables can also be called the *dependencies* of the given calculator. Therefore, when acquiring the outcome of a calculator a calculation variable provider has to be provided and that calculation variable provider provides values for all these dependencies. Nevertheless, the calculator does not implement a specific calculation algorithm as the calculation algorithm itself is defined by declaration in the application configuration 405.

As outlines above, in order to perform the calculation task *dependencies* are relevant. The *variable dependency* is therefore an explicit definition of the dependencies between the calculation variables of a resource signature. Therefore, however, these dependencies are defined during application configuration 405 and in particular in configuration files 430. That means that these dependencies do not change at run time or application execution. The variable dependency is used for determining the sequence of a calculation. In this respect, explicit representation of the dependencies is needed to perform optimization as each recursive variable should not be calculated in a single recursive way, but all should commonly be calculated in one recursion. Based on that, for calculation the hierarchy of elements has to be run through only once as highlighted by the following example:
■ P1, P2 are parameters
■ calculation scheme local: V1 = P1, V2= V1 + P2
■ calculation scheme recursive: V3 = sum over all the three of the child resources + V2
■ dependencies:
   - P1: {}
   - P2: {}
   - V1: {P1}
   - V2: {P1, P2, V1}
   - V3: {P1, P2, V1, V2} + V3 at all child resources

When at run time a specific request for a resource or a resource application is generated, for example as a list of calculation variables for which values are requested, based on the variable dependency of the given signature on the list of variables a *variable dependency projection* is generated. This variable dependency projection provides a projection of the variable dependency on the list of variables. The variable dependency projection contains explicitly the exact dependencies which are necessary for answering the request. With respect to the example highlighted above, the variable dependency projection generated based on a request of P2 and V1 would contain:
■ P2: []
■ V1: [P1]

As can be seen, V2 and V3 are not contained in this projection as their values are irrelevant for this request.

Moreover, preferably application development system 402 provides an *expression calculator* which interprets an expression like for example "A+B". In the case of the expression calculator, the dependencies of the given expression calculators are therefore exactly those calculation variables which are configured in the expression.

Furthermore, preferably the application development system 402 provides a *recursive calculator* that encapsulates an algorithm that can aggregate the values a calculation variable has at the members of an enumeration of value providers. The recursive calculator can aggregate the values of several calculation variables all at once. For example, two value providers are given device A, employee B, each providing both cost type A and cost type B. The value of cost type A at device A is €2 and the value of cost type A at employee B is €3.

The value of cost type B at device B is €5 and the value of cost type B at employee B is €7. The aggregator would now aggregate in a single recursion as follows cost type A are €5 and cost type B are €12.

Moreover, the application development system 402 provides *value aggregators* that can aggregate lists of values as for example sums, maximums, minimums or also averages and the like.

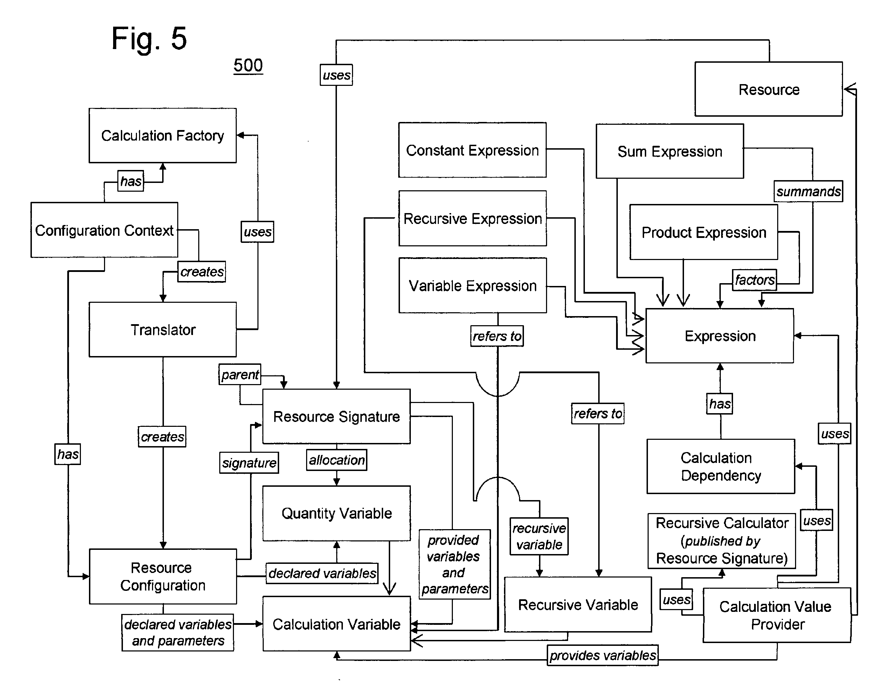

The interrelation of the various elements provided by the application development system 402 as outlined above are further detailed within the following Fig. 5.

Based on these elements, which are configured at application configuration 405 translated computer-program objects 435 are generated. These translated computer-program objects 435 are instances of the program language translation classes 425 and reflect the translation of the configuration as provided by configuration files 430. Based on these translated program objects 435, the application can be executed, preferably at computer system 115.

For the application execution 410, as instances of the translated program object 435 configuration objects 440 are generated. The application at run time 450 uses this configuration objects in order to generate graphical user interface query values performed calculation tasks and provide reporting services and so on. Furthermore, resource object 445 uses the configuration objects 440 in order to calculate values for the configured calculation variables using the calculation objects of the configured type.

In order to further illustrate the relation between the generic implementation provided by application system 402 and the specific implementation configured in application configuration 405 the following example is provided. In this example, a configuration file 430 is provided which highlights in straight letters the elements provided by application development system 402 and highlights the definition provided by application configuration 405 by italic letters:

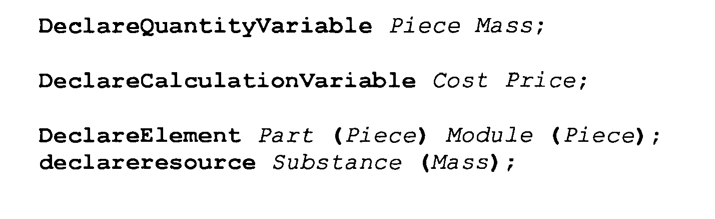

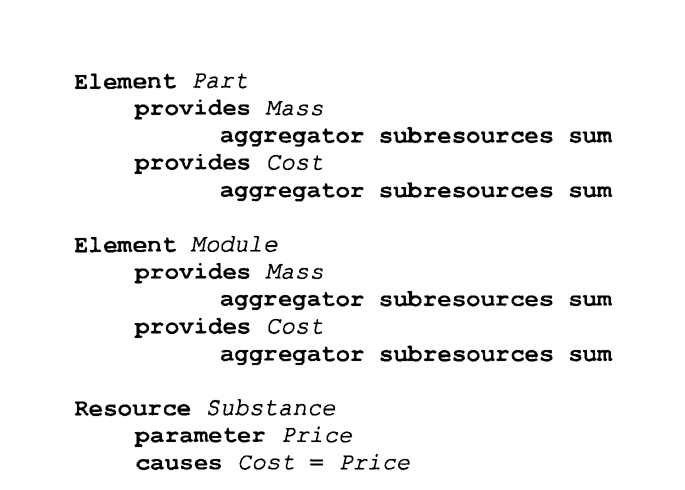

The example shows a quantity variable declaration (DeclareQuantityVariable) which provides the two quality variables "Piece" and "Mass". Furthermore, the example shows a calculation variable declaration (DeclareCalculationVariable) for the two calculation variables "Cost" and "Price". As a elements, "Part (Piece)" and "Module (Piece)" are declared (DeclareElement). This element declaration defines that the consumption value for both Part and Module is Piece. Furthermore, a resource is declared (DeclareResource) as "Substance (Mass)". This Substance does not have a element signature as it is a "natural" resource and thus consumed by its mass.

For the object definition, a element definition "Element *Part*" is provided. Using the grammar and syntax of the Domain Specific Language in addition also combinations of elements could be defined. E.g. in this example an association between parts and assemblies could be declared that would define that Parts can be assigned only to Assemblies. Furthermore, it is defined that Parts can be requested for their mass. The mass again is calculated as the sum of the masses of their assigned sub-resources (provides *Mass,* aggregator subresources sum). Moreover, it is defined that Parts can also be requested for their Cost value the Cost value is calculated based on the sum of the Cost values of their assigned sub-resources (provides *Cost*, aggregator subresources sum). Based on that definition, all elements or resources can be sub-resources which have defined as possible association or combination "Part". The resource substance could for example be defined by such an association assigning substances to Parts. Furthermore, it is defined that a substance has as a parameter only its Price.

In this example, it is defined that when a given amount of the substance resource is assigned, this causes Cost. In this example, the Cost is calculated as the price of the substance (causes *Cost* = *Price*).

This example shows an exemplary configuration file 430 for a given implementation of a domain-specific language. However, this specific syntax grammar and elements used in this example only serve as an illustrative example, wherein alternative implementations of the present invention in particular alternative embodiments of a domain-specific language may provide different syntax, grammar and elements. This may be further highlighted when comparing the above example with the configuration file 210 of Fig. 2. Here it comes apparent that the configuration above uses a slightly different syntax and additional elements. Nevertheless, both examples follow the principles an techniques of the present invention and may serve as illustrative examples.

This may be further illustrated by the following example which provides a configuration example for another exemplary implementation of the present invention:
VariableDeclaration 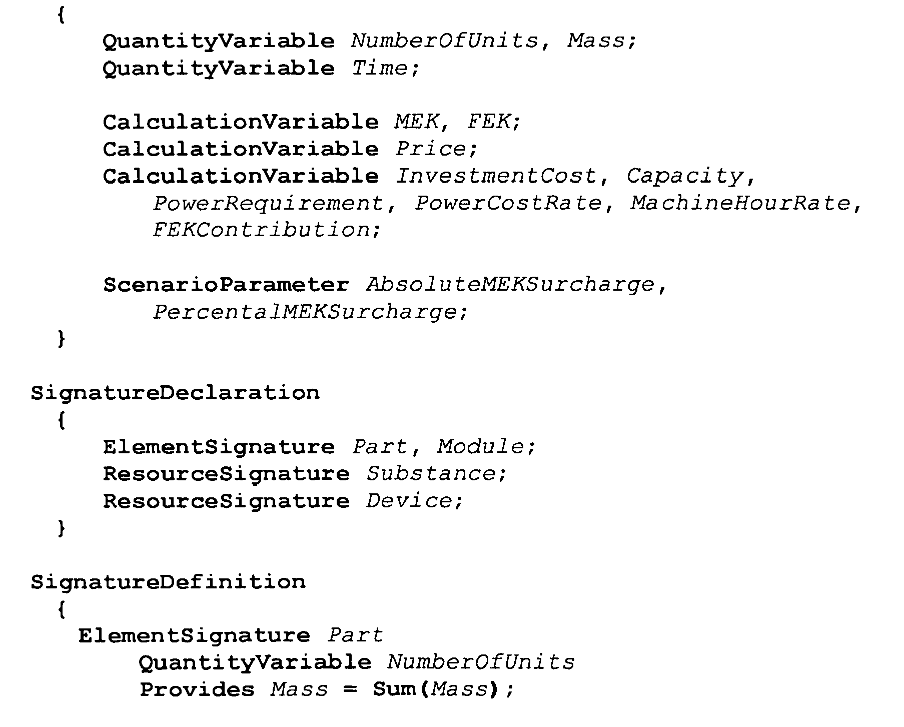 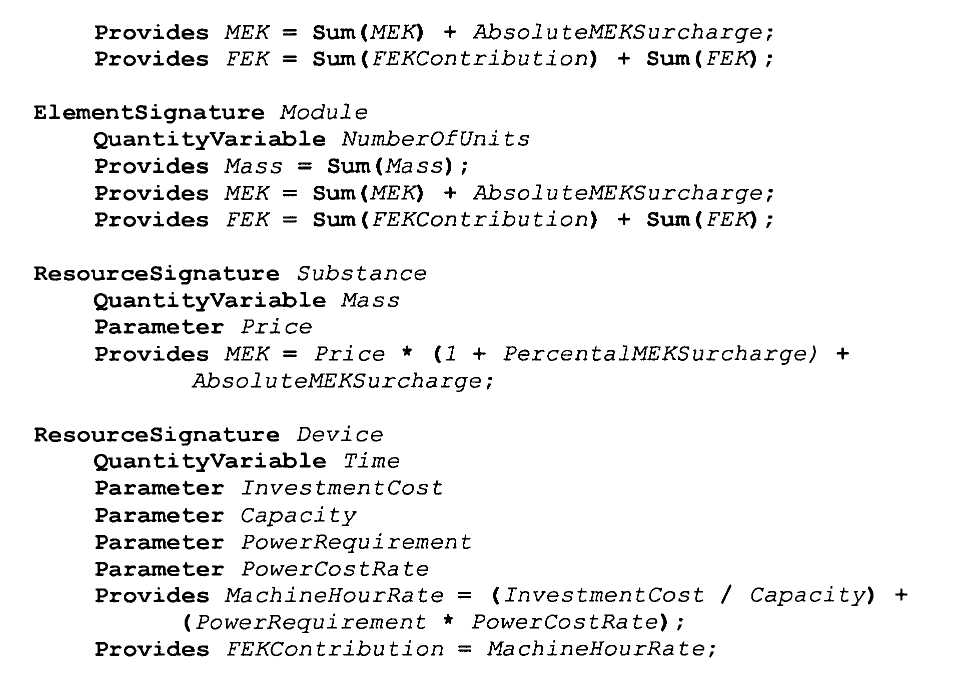
Fig. 5 shows the static class structure of a program language translator 500, preferably a compiler/parser that generates from a given configuration file 430 a *resource configuration* object and further the class structure of the class "resource configuration".

The generated object 440 of the class "resource configuration" enables the calculation of values of the "provider" calculation variables of the various resource signatures. That means that in case a resource is requested for the value of a variable, for example by way of a graphical user interface of the application, the resource uses the expression that is associated to its signatures and the variable in order to calculate that value.

Furthermore, the generated object performs the administration of the information about the dependencies between the various calculation variables. With respect to the graphical user interface, the generated object provides the configured resource type, i.e. the resource signature for the display and administration of the graphical user interface's surface.

In the following, elements of the static classes structures 500 illustrated in Figure 5 are explained. The "*configuration context*" is the starting point for the graph of the configuration objects. At run time, in particular when the application is starting, a new configuration context is generated, which is initialized by way of a string (the string being configured according to the domain-specific language) or a file, the file containing a configuration according to the domain-specific language. In other words, when the application starts by reading a configuration file 430, a new configuration context is initialized. The configuration context instantiates the *translation* class by way of the configured string or configuration file 430.

The instantiated *translator* object translates the string/configuration file and thereby generates the graph of a configuration object. This procedure can also be interpreted as the compiling of the configuration string or configuration file into an object graph. Preferably, the *translator* is implemented as a parser.

The *calculation factory* class provides the method for the generating of new calculation variables, resource signatures, expressions and the like. This *calculation factory* class is used by the *translator* class.

The *translator* class is preferably implemented as a parser. The program code of the *translator* class is in a preferred embodiment generated by a translator generator, based on the formal grammar, syntax and elements of the domain-specific language 415. In a preferred embodiment, the code of the translator is a C# code and the C# code of the *translator* class, preferably a parser class, is generated by a parser generator, for example ANTLR 3.0.1. The grammar of the domain-specific language 415 for that purpose contains at least some defined rules program code fragments, which can be built into the code of the *translator* class by the translator generator. Preferably, the grammar of the domain-specific language contains C# code fragments, or rather, C# snippets, which can be built into the code of the translator, or rather, parser class, by a parser generator, in an exemplary embodiment, an ANTLR parser generator. The generation of the translator, however, is done at the design level 320, as illustrated in Figure 3. This means that the parser or rather translator preferably is provided and pertains to a specific domain-specific language 415, and is therefore not changed during the application configuration 405 or the application execution 410. Therefore, the actual translation is done by an instance of the *translation* class, which is generated from the configuration context that again is generated based upon a configuration file 430.

The following example may further illustrate the way the translator works; the example is about translation rules for numbers in expressions:

Expression: Price * (1 + PercentalCostSurcharge) + AbsoluteCostSurcharge:

For the translation of this expression string, a sum object is generated that again consists of a product object (price * (1 + PercentalCostSurcharge)) and a variable expression object (AbsoluteCostSurcharge). The product object has as a second factor, again a sum object, which has as first summand the figure "1".

The following grammar rules would determine what is to be executed during translation of

```
 such a number:
 numberLiteralExpression [IParserContext context] returns
 [IExpression expr]
 DECIMAL
 {
   $expr =
 context.CalculationFactory.CreateConstantExpression($DECIMAL.Text
 );
 }
 ;
```

This grammatical rule generates by way of the calculation factory, a new constant expression object, which will be initialized with the text of the translated number, in this case "1". The generated object is handed back and works as a summand for the higher level sum object. In the event that at a later stage a constant expression object is requested, it would always hand back as a result of that query, its initializing value, in this case the value "1".
Similarly, a sum object will always hand back in response to such a request the sum of the values of the summand and so on.

The translator generator then builds in the code, in this example, the calculation factory call, into the *translator* class.

The *translator* class further generates upon translation of a configuration defined according to the domain-specific language 415 an object graph that has as the starting objects a *resource configuration.* The *resource configuration* object, as illustrated in Figure 5, then provides several further objects that are also generated by the *translator* class. In particular, the *resource configuration* objects provides a list of the declared *calculation variables,* a list of the scenario parameters, a list of the declared *quantity variables* that are the consumption values of the resources, and a list of the declared *resource signatures,* i.e. resource types.

The *calculation variable,* as illustrated in Figure 5, is an object of the type calculation variable, and therefore only an identifier for a calculation variable, which can be used for calculation, but also for a display that can be edited or used within reports. The *quantity variable* object, as indicated in Figure 5, is a particular calculation variable that serves to define the consumption values, for example, number of pieces, machine time and like.

The *recursive variable* object is a further specific calculation variable that contains the value of the aggregation of a calculation variable at the assigned sub-structure elements or subresources. An example might be the expression: "provides mass=sum (mass)" which configures in this example a recursive variable. The value of that recursive variable is the sum of the masses of the assigned sub-structure elements or sub-resources. For example, a module, "sum(mass)", might reflect the sum of the masses of all built-in parts. The grammar and syntax of the domain-specific language 415 therefore contains at least a rule that is used during translation, or rather compiling of such a configuration of recursive variables.

The *resource signature* class aggregates all configuration information that pertains to a specific resource type. In particular, the Boolean attribute "is structure element" indicates whether the specific resource type is of the element type, as for example sub-parts or assemblies, or whether it is of the type of "natural" or "normal" resources, such as machines, employees, etc. This information can later be used, for example using the graphical user interface of the generated computer application for the purpose of exporting of a bill of materials. The *resource signature* further comprises a list of *calculation variables,* i.e. provided variables that are provided from a resource of that specific signature. In addition, the *resource signature,* as indicated in Figure 5, contains a list of parameters. Furthermore, an association variable, meaning a variable providing the value of the consumption of a resource of that signature, is contained in the *resource signature,* as well as a list of all *recursive variables.* For all provided variables, an *expression* is provided with the resource signature, used for the calculation of the value of that resource. This expression is later used for the calculation of a specific resource in order to calculate the value of the variable.

The *expression* object, as illustrated in Figure 5, provides a result in response to a request. With that request, a *value provider* must be given. Furthermore, there are at least two types of *expressions*, namely simple expressions and assembled expressions. Examples of simple expressions might be *recursive expressions* that provide as a result the value of the associated *recursive variable* at the value provider (the value provider being responsible for the calculation of that value). A further example of a simple expression might be a *variable expression* that provides as a result the value of a variable at the value provider. An even further example of a simple expression might be a *constant expression* that provides as a result the value of the constant at the expression.

For assembled expressions, an example might be a *sum expression* that provides as a result the sum of the results of the sub-expressions. A further example is a product expression that provides as a result the product of the results of the sub-expressions.

These expressions, however, are just illustrative in characters and different embodiments of the present invention might provide additional or other expressions. Nevertheless, the examples might serve for a better understanding of what an expression might be.

The *calculation dependency* class, as illustrated in Fig. 5, contains the information about the dependency between the different variables of an expression. This information is automatically generated based upon a configured *expression*. The *calculation dependency* ensures that for a later performed calculation, only those variables that are necessary to answer a particular request are calculated. This serves towards enhancing the performance of the calculation and the overall application in case of rather complex configurations.

As indicated in Fig, 5, the *calculation value provider* is implemented as an interface by a concrete resource, for example, a specific module in a particular project. At run time, in case the calculation value provider is requested for the value of one of the provided variables, for example the value of the variable "mass", the calculation value provider evaluates the expression at the signature of the variable mass.

Finally, with respect to the classes highlighted in Fig. 5, it is to be noted that the *resource* and the *calculation value provider* classes are the only classes of the classes highlighted in Fig. 5 that are not instantiated at server start time.

By using the domain-specific language 415 for the configuration of an application object, the parameters and the calculation algorithms can be configured instead of being coded, as it would be necessary in the methods known in the art. According to the prior art methods, objects of the specific domain are generally described using methods and properties. For example, according to the methods known in the art, objects of a class "part" have a method for requesting the value of "mass", and may have further attributes, such as quantity and price, which can be requested or assigned. However, such objects according to methods known in the art would need specifically coded dialogs for the input and request of values, for example for the attribute price. Further, specifically coded calculation methods would be needed in order, for example, to calculate the value of "mass". And finally, specifically coded methods would be needed for the persistence in a database.

As the present invention in contrast provides a technique for the configuration of objects, the parameters and calculation algorithms, the graphical user interface of the application, the database and the calculation algorithms do not now have to be specifically coded, but can be configured, in other word "programmed" on a much higher level of abstraction. This configuration of a higher abstraction level makes use of a program code for the graphical user interface, database and calculation, which is enabled to work with resource signatures and resource. That code is provided by the application development system 402, as outlined in Fig. 4, in the design phase 320, as outlined in Fig. 3.

Therefore, this code need not be developed during a specific project, but instead the application designer in a specific project needs only to define a configuration file 430 that references, by using the domain-specific language 415, the code fragments provided by the application development system 402. The code provided by the application development system 402 now works with a list of variables and dictionaries of values and expressions instead of working with specific, hard-coded properties, which would be necessary according to the methods known in the art. Further, it is to be noted that a configuration file translated by the compiler highlighted in Fig. 5 is not first translated into program code and then compiled. In contrast, the translator generated by the translated generator generates an object graph of instances of predefined configuration classes 420. This is illustrated by the example that has further been described above in a context of the translator objected illustrated in Fig. 5.

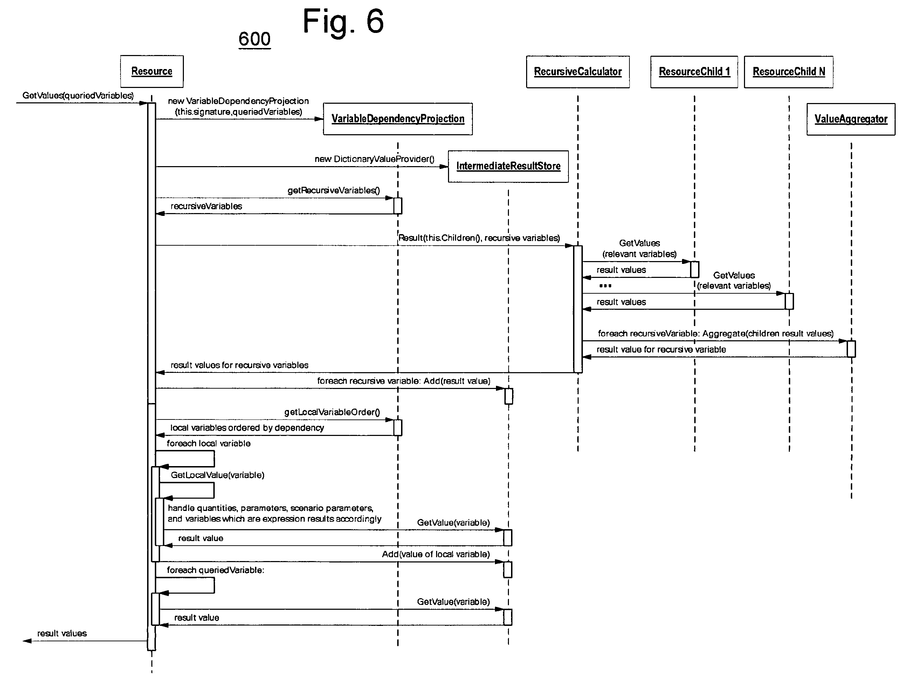

Fig. 6 illustrates a sequence diagram that shows the sequence of a configured calculation.
This sequence diagram 600 illustrates that the configuration objects generated by the translator define the behaviour and appearance of the computer application that has been created by application configuration 405.

In particular, the display and administration of resources, for example a module, are determined by the attributes configured at the resource type, or rather signature of a particular resource. This means that the configured parameters are displayed for user input and that the values of the provided configured variables are displayed as a calculation result. The graphical user interface of the computer application can therefore be completely developed on a generic level and therefore be provided by the application development system 402 at the design phase 320. In other words, based on the configuration of the resource types in the configuration files 430 a graphical user interfaces with a computer application can be generated without further coding of any specific program code.
Furthermore, for the evaluation of the values of variables at a resource, the calculation uses the configured expressions on the basis of the user-defined values of the resource parameters.

In particular, sequence diagram 600 shows that GetValues() is requested at a specific resource. This request is done with a list of the queried variables. The resource then generates a variable dependency projection. This variable dependency projection then evaluates the variables that have to be calculated for answering the request according to the dependencies of the variables. That means that all recursive variable that have to be calculated are evaluated or rather calculated and all local variables that have to be calculated are evaluated according to their evaluation sequence. Local variables for example are parameters or provided variables.

The resource then generates a storing object (IntermediateResultStore) for the intermediate result. The resource then requests by GetRecursiveVariables() the recursive variables that have to be calculated and uses the RecursiveCalculator to calculate the values of these variables. For that purpose it hands on a list of the sub-resources of these variables.

The RecursiveCalculator request all sub-resources for the necessary values. Further, the RecursiveCalculator aggregates these values as the sum of the values at the sub-resources.

The resource stores these values again in the IntermediateResultStore.

The resource then requests by way of getLocalVariableOrder() the local variables, in this examples, parameters and provided variables which have to be calculated. By way of getLocalValue() the resource calculates the values of the local variables in the right sequence. That means that for a parameter the value is simply the value of the parameter in that very moment. For a provided variable the value is the result of the evaluation of the expression. Here, the expression objects are requested which have been generated by the translator based on the configuration. For the recursive variables, the values are already in the IntermediateResultStore.

The resource then reads the values of the requested variables from the IntermediateResultStore and hands them back.

That the values of the requested variables have been calculated is guaranteed by the configuration as defined in the configuration files 430 as on the basis of this configuration, the variable dependency projection and the calculation sequence of the local variables has been determined.

Thus, sequence diagram 600 illustrates that the calculation in an application that has been generated according to the technique of the present invention is performed by way of the object graph that has been generated by the translator.

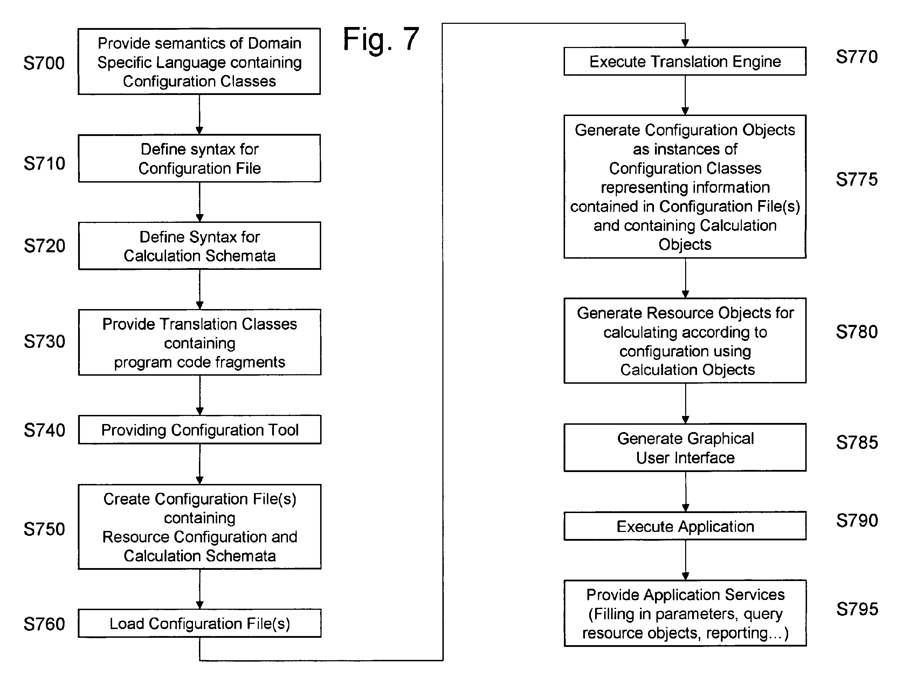

Fig. 7 illustrates the process of providing an application development system 402 at the design phase 320, the generation of the configuration files 430, configuration phase 430 and the application execution 410 preferably being done at computer system 115.

In particular, in step S700, a domain-specific language is provided which contains configuration classes as an abstract model. Then by the semantics of the domain-specific language at step S710 a syntax is defined that allows the definition of configuration files 430. Furthermore, at step S720 similarly a syntax is defined for calculation schemata which can be used within the definition of configuration files 430. At step S730 calculation classes are provided containing program code fragments that allow translating a configuration file 430 into the object model. The steps S700 to S730 reflect the main steps that serve for providing an application development system 402 at the design phase 420.

For turning to application configuration 405 at the configuration phase 330 in the next step S740 a configuration tool is provided. Therefore, the providing of a configuration tool can either be also part of the application development system 402 or can be done independently, as the configuration of files 430 in a preferred embodiment are text files which could be generated using a wide variety of tools. However, in order to provide a user with a configuration tool that by a graphical user interface supports the correct definition of a configuration file according to the syntax and grammar of the domain-specific language in a preferred embodiment a specific configuration tool is provided that by its graphical user interface and functionality ensures that a user can only create a configuration file which is compatible to the rules, grammar and syntax of the defined domain-specific language.

Using the configuration tool provided in step S740, in step S750 a string, a configuration file or several configuration files are created which contain resource configurations and calculation schemata expressed according to the grammar and syntax of the domain-specific language provided in step S700. Step S750 therefore reflects the main step of the application configuration 405 at the configuration phase 330. However, the providing of a configuration tool S740 can also be part of the application configuration 405 at least in case that a specific configuration tool is not provided within the application development system 402.

In the next step S760 the configuration file is loaded, preferably the application file is loaded on a computer system 115 but has access to the elements provided by the application development system 402 as illustrated and discussed in the context of Fig. 1. As a next step, in step S770 the translation engine provided by the application development 402 is executed that translated the loaded configuration files 430 into the object graph. Based on this translation, in step S775 configuration objects are generated as instances of the configuration classes 420 that represent information contained in the configuration files 430 and contained in the calculation objects provided in the configuration objects 440. In step S780, resource objects are generated for performing calculations according to the configuration files. These resource objects use the calculation objects generated in previous step S775.

Using the objects generated in the previous steps, in step S785 a graphical user interface of the intended computer application is generated and the application is, from a user perspective, executed preferably on computer system 115 in step S790. By presenting the graphical user interface and executing the application, the user is enables in step S795 to make use of provided application services like for example the filling in parameters, performing queries, requesting resource objects, reporting services and the like.

## Claims

1. A method of developing a computer application to perform calculation tasks based on configuration of resource objects using a domain specific language, comprising:
providing a domain specific language defining a syntax for configuration of resource objects, each element of the syntax having assigned a generalized functionality;
providing a set of configuration classes defining an abstract object model implementing the generalized functionality of the domain specific language;
providing a translation engine configured for translating the domain specific language into the object model;
creating one or more configuration files using the domain specific language, the configuration files at least comprising declaration of a set of variables, a set of resources and the structure of each resource;
translating the configuration files into the object model; and
generating in response to the translation a computer application presenting a graphical user interface and performing calculation tasks upon user input as defined in the configuration files.

2. The method of claim 1 wherein the declaration of the structure of a resource comprises:
declaration of a resource signature, the resource signature determining the attributes of said resource and the calculation schemes used by said resource; and
declaration of the resource assignment associating other resources as sub-resources to said resource.

3. The method of any of claims 1 and 2 wherein the generalized functionality provides for generating of a graphical user interface and performing of calculation tasks upon user input, wherein generating and performing depends on the configuration of resource objects.

4. The method of any of claims 1 - 3 wherein the declaration of a set of variables at least comprises:
declaration of at least one quantity variable, the quantity variable expressing the consumption of a resource.

5. The method of any of claims 1 - 4 wherein the declaration of a set of variables at least comprises:
declaration of at least one calculation variable, the calculation variable for specifying a result of a calculation or a parameter of a calculation.

6. The method of any of claims 1 - 5 wherein the declaration of a set of resources further comprises:
declaration of a set of elements, elements being part of a product structure.

7. The method of claim 6 wherein the declaration of the structure of a resource comprises:
declaration of the resource signature of said resource, the resource signature at least comprising a quantity variable, the quantity variable expressing the consumption of said resource and being declared in the set of variables, a element as parent resource consuming said resource as a child resource, and a calculation scheme for calculating the amount of the quantity variable caused by consumption.

8. The method of any of claims 7 wherein the resource signature further comprises:
a calculation variable being declared in the set of variables specifying as a caused variable the result of the calculation scheme.

9. The method of any of claims 6 - 8 wherein the resource signature further comprises:
a set of parameter variables, the parameter variables being part of the calculation scheme and a value of a parameter variable being determined based on user input.

10. The method of any of claims 8 and 9 wherein translating the configuration file further comprises:
reading the configuration file;
generating a variable dependency determining the interdependency of the calculation variables defined in the resource signatures; and
generating an aggregator for summing up any calculation variable based on the values of the caused variables of the child resources.

11. The method of any of claims 4 - 10 wherein providing domain specific language further comprises:
providing one or more meta-resource types, each meta-resource type at least being determined by the type of quantity variable, a list of parameters and a calculation scheme.

12. The method of claim 12 wherein the meta-resource types comprise at least one of substance, module, machine, and employee.

13. A computer-readable medium having stored thereon computer-readable instruction that, when run on a computer, are configured for performing the steps of any of the methods of claims 1 - 12.

14. A computer system prepared for executing a computer application, the computer application configured for performing calculation tasks based on configuration of resource objects using a domain specific language, comprising:
means providing access to a set of configuration classes defining an abstract object model implementing a generalized functionality of a domain specific language, the domain specific language defining a syntax for configuration of resource objects, each element of the syntax having assigned generalized functionality;
translation engine configured for translating the domain specific language into the object model;
means providing access to one or more configuration files using the domain specific language, the configuration files at least comprising declaration of a set of variables, a set of resources and the structure of each resource; and
processing unit generating in response to the translation of the configurations files a computer application presenting a graphical user interface and performing calculation tasks upon user input as defined in the configuration files.

## Amended claims

### Amended claims in accordance with Rule 137(2) EPC.

**1.** A method of developing a computer application based on a generic application system (402) to perform tasks of a particular problem domain, wherein the application system is based on a generalized object model for the particular problem domain, the problem domain being the domain of calculation tasks, and wherein the developed computer application is executed at run-time based on instantiating at least resource objects (445) as configured in a declarative way using a domain specific language (415), the domain specific language being adapted to the particular problem domain, comprising:
providing a domain specific language (415) for the particular problem domain defining a syntax for configuration of resource objects (445), each element of the syntax having assigned a generalized functionality;
providing a set of configuration classes (420) defining an abstract object model for the particular problem domain implementing the generalized functionality of the domain specific language;
providing a translation engine (500) configured for translating the domain specific language into the object model;
creating one or more configuration files (430) using the domain specific language, the configuration files at least comprising declaration of a set of variables, a set of resources and the structure of each resource;
translating (435) the configuration files into the object model; and
generating in response to the translation a computer application (450) presenting a graphical user interface (220, 230) and performing tasks within the particular problem domain upon user input as defined in the configuration files, wherein the particular problem domain is the domain of calculation tasks.

**2.** The method of claim 1 wherein the declaration of the structure of a resource comprises:
declaration of a resource signature, the resource signature determining the attributes of said resource and the calculation schemes used by said resource; and
declaration of the resource assignment associating other resources as sub-resources to said resource.

**3.** The method of any of claims 1 and 2 wherein the generalized functionality provides for generating of a graphical user interface (220, 230) and performing of calculation tasks upon user input, wherein generating and performing depends on the configuration of resource objects (210).

**4.** The method of any of claims 1-3 wherein the declaration of a set of variables at least comprises:
declaration of at least one quantity variable, the quantity variable expressing the consumption of a resource.

**5.** The method of any of claims 1-4 wherein the declaration of a set of variables at least comprises:
declaration of at least one calculation variable, the calculation variable for specifying a result of a calculation or a parameter of a calculation.

**6.** The method of any of claims 1 - 5 wherein the declaration of a set of resources further comprises:
declaration of a set of elements, elements being part of a product structure.

**7.** The method of claim 6 wherein the declaration of the structure of a resource comprises:
declaration of the resource signature of said resource, the resource signature at least comprising a quantity variable, the quantity variable expressing the consumption of said resource and being declared in the set of variables, a element as parent resource consuming said resource as a child resource, and a calculation scheme for calculating the amount of the quantity variable caused by consumption.

**8.** The method of any of claims 7 wherein the resource signature further comprises:
a calculation variable being declared in a set of variables specifying as a caused variable the result of the calculation scheme.

**9.** The method of any of claims 6-8 wherein the resource signature further comprises:
a set of parameter variables, the parameter variables being part of the calculation scheme and a value of a parameter variable being determined based on user input.

**10.** The method of any of claims 8 and 9 wherein translating the configuration file (210) further comprises:
reading the configuration file (S760);
generating a variable dependency (600) determining the interdependency of the calculation variables defined in the resource signatures; and
generating an aggregator for summing up any calculation variable based on the values of the caused variables of the child resources.

**11.** The method of any of claims 4-10 wherein providing domain specific language (415) further comprises:
providing one or more meta-resource types, each meta-resource type at least being determined by the type of quantity variable, a list of parameters and a calculation scheme.

**12.** The method of claim 11 wherein the meta-resource types comprise at least one of substance, module, machine, and employee.

**13.** A computer-readable medium having stored thereon computer-readable instruction that, when run on a computer, are configured for performing the steps of any of the methods of claims 1-12.

**14.** A computer system prepared for developing and executing a computer application, the computer application being developed based on a generic application system (402) and being developed to perform tasks of a particular problem domain, wherein the application system is based on a generalized object model for the particular problem domain, the particular problem domain being the domain of calculation tasks, and wherein the developed computer application (450) is executed at run-time (410) based on instantiating at least resource objects as configured in a declarative way using a domain specific language (415), the domain specific language being adapted to the particular problem domain, comprising:
generic application development system (402) providing access to a set of configuration classes (420) defining an abstract object model for the particular problem domain and implementing a generalized functionality of a domain specific language (415), the domain specific language being adapted for the particular problem domain and defining a syntax for configuration of resource objects, each element of the syntax having assigned generalized functionality;
translation engine (500) configured for translating the domain specific language into the object model;
means for providing access to one or more configuration files (430) using the domain specific language, the configuration files at least comprising declaration of a set of variables, a set of resources and the structure of each resource; and
processing unit adapted for translating (435) the configuration files into the object model and generating in response to the translation a computer application (450) presenting a graphical user interface (220, 230) and performing tasks within the particular problem domain upon user input as defined in the configuration files, wherein the particular problem domain is the domain of calculation tasks.
